# EUROPEAN PATENT APPLICATION

(11) **EP 3 881 672 A1**
(43) Date of publication of application: **22.09.2021**
(21) Application number: 20163379.9
(22) Date of filing: 16.03.2020
(51) Int. Cl.: A01G 18/60, G01N 1/22, G01N 33/24

(54) **METHOD OF PROBING A MYCELIAL SUBSTRATE MATERIAL**

(71) Applicant: CNC Grondstoffen BV, 6596 MA Milsbeek (NL)
(72) Inventor: Van der Horst, Hélène Caroline, 6712 EL Ede (NL); Baars, Johan, 6596 MA Milsbeek (NL)
(74) Representative: De Vries & Metman

(57) **Abstract**

Method of probing a mycelial substrate material, in particular phase 3 compost in an environment, such as a tunnel or bunker. Air samples are taken from the environment. Subsequently solid particles in the air sample are separated from the air sample, e.g., by cyclonic separation. The air sample is analyzed for the presence of genetic material of or more mycoviruses or pathogen fungi, such as Trachiderma aggressivum.

## Description

The present invention relates to a method of probing a mycelial substrate material, in particular for the detection of pathogen microorganisms in a mycelial substrate material in an environment, such as a tunnel or bunker. The mycelium substrate material is for instance mushroom compost, in particular phase 3 compost, to be checked for the presence of pathogen fungi, such as Trichoderma aggressivum, and/or viruses, such as Mushroom Virus X.

Mushroom compost or substrate is intended for the cultivation of edible mushrooms and is typically produced from a mixture of wheat straw and/or horse bedding (straw rich horse manure), poultry manure, gypsum and water. In some cases ammonium sulphate or urea are added as an additional source of nitrogen. The composting process is generally performed in three phases: In phase 1, compost is mixed, hygienized and fermented to form fresh compost. In phase 2, the compost is made selective for growth of a desired fungi - e.g., Agaricus bisporus - and conditioned e.g., by reducing carbohydrate content and ammonia content by thermophilic microorganisms. At the end of phase 2, the compost is inoculated and subsequently colonized by mycelium in phase 3. Phases 2 and 3 typically take place in an enclosed environment such as a tunnel with circulating air.

After completion of the mycelial colonization the phase 3 compost is distributed to mushroom farms for growing the mushrooms.

When the compost changes from phase 2 to phase 3, the compost can be contaminated or infected by pathogens. A particularly harmful pathogen is green mould. Green mould is caused by infestation with Trichoderma, e.g., Trichoderma aggressivum, Thrichoderma atroviride or Trichoderma harzianum. Particularly if spawned mushroom beds are infested with Trichoderma aggressivum, non-productive areas occur on the casing surface resulting in serious yield losses. Compost infestation can result in green sporulation which can turn into black patches not colonized by mushroom mycelia.

Other pathogens are for example mycoviruses, such as Mushroom Virus X and die-back virus. A number of RNA viruses is disclosed in Deakin, G. et al., "Multiple Viral Infections in Agaricus bisporus - Characterisation of 18 unique RNA viruses and 8 ORFans identified by Deep Sequencing", "Scientific Reports", 2017, www.nature.com/scientificreports.

Other mushroom species, such as shiitake or oyster mushroom, are grown on other types of substrates, such as sterilized mixtures of saw dust, flour and water. Similar problems, albeit with different pathogens, occur with such substrate materials.

Smith L. and Stanley, K., "Multiplexed Detection and relative Quantitation of Bacterial and Fungal Pathogens of Mushrooms" International Society for Mushroom Science, 2016, pp. 100 - 103, discloses polymer chain reaction (PCR) based methods for detection of pathogens capable of infecting mushrooms, such as Trichoderma. This method uses very small samples. To test a complete compost batch in a bunker, a very large number of samples is required to be able to draw a reliable conclusion about the presence of the pathogen.

Kredics, L. et al., "Molecular Tools for Monitoring Trichoderma in Agricultural Environments", Frontiers in Microbiology, 2018, vol. 9, article 1599, www.frontiersin.org discloses the use of PCR and other molecular tools for detecting Trichoderma aggressivum and other Trichoderma strains.

D. Radványi et al., Rapid evaluation technique to differentiate mushroom disease-related moulds by detecting microbial volatile organic compounds using HS-SPME-GC-MS, Anal. Bioanal. Chem 407, 22 November 2014, p. 537 - 545 discloses how the VOC profile of a fungal mycelium is monitored over a certain period in order to identify possible pathogens. In practice this method is not always sensitive enough for checking large tunnels, e.g., comprising more than 80 tons.

It is an object of the invention to provide a method of probing a mycelial substrate which enables reliable testing of large batches, e.g., for early detection of infection of mycelial substrate materials by microbiological pathogens.

The object of the invention is achieved with a method of probing a mycelial substrate material in an environment, such as a tunnel or bunker. Air samples are taken from the environment and subsequently solid particles in the air sample are separated from the air sample.

It was found that air samples contain particles coming from various parts of the batch. As a result, air samples are significantly more representative for a compost batch than samples directly taken from the compost bed.

The air sample can in particular be analyzed for the presence of traces, in particular genetic material, originating from mycoviruses or fungi or any other type of microorganism hindering full colonization of the substrate by mycelium or hindering growth of healthy high quality fruiting bodies.The particles can be separated from the air, e.g., by cyclonic or centrifugal separation. The separated solid particles can for example be collected in a liquid to form a liquid sample.

The air can be sampled using known air samplers. Suitable air samplers are for instance disclosed in US 2010/0089173 and the air samplers commercially available as Coriolis® Micro air samplers. These air samplers have an air inlet defining a spiraling flow path causing the flow to swirl and form a vortex separating the heavier particles from the swirl of the main flow. The swirling flow intimately passes a liquid reservoir containing a liquid collecting the separated solid particles. Such air samplers separate particles with a particle size of 0,5 micrometer or more. This includes spores or mycelial fragments of Trichoderma aggressivum. Although RNA material of mycoviruses does not form large particles, this material is usually borne by larger particles, such as spores of Agaricus bisporus. Optionally, a series of samples can be taken. If for example samples are taken during unloading of a tunnel - which typically takes about 30 minutes - a series of three samples can be taken using a Coriolis Micro sampler, typically taking about 10 minutes per sample. The three or more samples can be combined. This way, about 3 - 9 m³ of air can be sampled.

In a specific embodiment, a particle counter can be used to look for a location with a higher concentration of air borne particles, e.g., with a higher concentration of particles having a particle size of at least 2,5 microns. Those locations are particularly suitable for collecting air samples. Suitable particle counters are for example the air quality meters of Dylos.

A particularly suitable location for taking air samples is at the connection of two serially aligned conveyer belts, e.g., on the route from the tunnel to a loading station for a transport vehicle. Here, the concentration of air borne particles will be relatively high.

A particularly suitable moment for sampling the air is at the end of the phase 3 process during unloading and before transporting the compost to a mushroom farm. At that moment the concentration of spores will be relatively high, also due to the stirring and poaching that comes with unloading of the tunnel or bunker.

In a next step, the liquid samples can be homogenized and ground. By grinding the solids, nucleic acids are released from the structural confines in the solids source material and made available for analysis. The samples can be analyzed for the presence of traces of pathogens. The samples can for example be analyzed for the presence of genetic material originating from one or more pathogens, such as Trichoderma aggressivum or mycoviruses.

The usual DNA analysis processes require relatively small samples. To meet this requirement the samples or combined samples can be concentrated, for example by centrifugation.

Genetic material can be present as spores of pathogen fungal strains, e.g., conidiospores and chlamydospores. Alternatively, or additionally, the particles can be analyzed for the presence of a virus, in particular Mushroom Virus X viruses. Mushroom Virus X disease is a collective name for a number of symptoms associated with 30 viral RNA's. Traces of these viral RNA's can be present in airborne compost particles or on basidiospores.

Mycelial substrate material, such as mushroom compost, typically comprises humic acids. Since such acids tend to inhibit DNA polymerases. To avoid this, these humic acids can be removed by using polyvinylpyrrolidon as an adsorbent. Other methods of removing humic acids are disclosed in WO 2006/073472.

The samples can be tested for the presence of DNA originating from Trichoderma aggressivum, for example using the methods disclosed in Smith L. and Stanley, K., "Multiplexed Detection and relative Quantitation of Bacterial and Fungal Pathogens of Mushrooms", International Society for Mushroom Science, 2016, pp. 100 - 103. This publication refers to diagnostic kits and assay panels for the identification of eight different mushroom pathogens, including Trichoderma aggressivum. These kits are commercially available from Ausdiagnostics, Mascot, Australia.

Further suitable DNA or RNA analysis techniques include for example LAMP (Loop-mediated isothermal amplification) and PCR (polymerase chain reaction), such as nested PCR or qPCR (e.g., TaqMan).

If any trace of DNA and/or RNA is found originating from one or more given pathogens, the complete batch of mushroom compost is destroyed. This can be done by steaming the batch for 10 hours at a temperature of 60°C or for 8 hours at a temperature of 70°C.

The method of the present invention is particularly suitable to be carried out during long distance transport of the phase 3 mushroom compost at low temperatures, e.g., below 10°C.

### Examples

An amount of substrate material was prepared by mixing straw, horse bedding, poultry manure, gypsum and water to form a regular mushroom compost. After the regular phase 1 and phase 2 processes, the compost was inoculated and stored in an aerated tunnel to go through the regular phase 3 process until mycelial colonization was completed.

After the end of the phase 3 process, the tunnel was opened and a particle counter (Dylos® air quality monitor) was used to identify positions with the highest concentration of air borne particles. It was found that the highest density of air borne compost particles can be found at a point where compost falls from the end of a conveyer onto a next conveyer.

Next steps of the test involved purposive infection of parts of the compost. For obvious reasons these steps had to be carried out in strict isolation from the tunnel. To this end a regular concrete mixer was used and filled with an amount of the compost. Rotating the mixer causes a release of air borne particles. A test with the Dylos® air quality monitor revealed that the density of air borne compost particles was somewhat lower than in the tunnel between two conveyers.

A part of the compost was infected with 10 wt% of a compost of the same composition infected and fully colonized by Trichoderma aggressivum.

During operation of the concrete mixer, a Coriolis Micro sampler was used to sample air at the opening of the concrete mixer. The sampler isolated the particles of the air sample in a sample suspension liquid. The suspension liquid was sterilized water.

DNA was extracted from 1 ml of the sample suspension liquid using a MasterPure® kit, available from Lucigen Corporation. Subsequently, the DNA preparation was tested by Wageningen University & Research using Taqman PCR with proprietary primers for the presence of DNA originating from Trichoderma aggressivum. The presence of the pathogen DNA was detected.

The test was repeated with a batch of compost infected with 0,2 wt% of the same infected compost. All further steps of the test were identical. Here as well, the presence of the pathogen DNA was detected.

As a check, the samples were also tested for the presence of mycelial Agaricus bisporus. The measured quantity of mycelial Agaricus bisporus should be the same, regardless of the amount of added infected compost. According to the test results, this happened to be the case.

Suitable primers include for example Th-F (CGG-TGA-CAT-CTG-AAA-AGT-CGT-G) and Th-R (TGT-CAC-CCG-TTC-GGA-TCA-TCC-G), as discussed in "A polymerase chain reaction-based test for the identification of Trichoderma harzianum biotypes 2 and 4, responsible for the worldwide green old epidemic in cultivated Agaricus bisporus", Applied Microbiology and Biotechnology, p. 246 - 250, 1999.

Suitable alternative primers for Trichoderma aggressivum are disclosed in Table 1 of Kredics, L. et al., "Molecular Tools for Monitoring Trichoderma in Agricultural Environments", Frontiers in Microbiology, 2018, vol. 9, article 1599, www.frontiersin.org discloses suitable primers for the PCR analysis.

Alternatively, the same DNA analysis can be carried out using the diagnostic kits and assay panels available from Ausdiagnostics, Mascot, Australia.

## Claims

1. Method of probing a mycelial substrate material in an environment, such as a tunnel or bunker, wherein air samples are taken from the environment and wherein subsequently solid particles in the air sample are separated from the air sample.

2. Method according to claim 1, wherein the particles are separated from the air by cyclonic separation.

3. Method according to claim 1 or 2, wherein the separated solid particles are collected in a liquid to form a liquid sample.

4. Method according to claim 3, wherein the liquid samples are subsequently homogenized and ground.

5. Method according to any one of the preceding claims, wherein the air sample is analyzed for the presence of traces, e.g., genetic material of one or more mycoviruses, such as Mushroom Virus X, and/or pathogen fungi, such as Trachiderma aggressivum.

6. Method according to claim 5, wherein the analyzed genetic material comprises spores.

7. Method according to any one of the preceding claims, wherein before taking the one or more air samples, a particle counter is used to examine at which position the concentration of particles is highest.

8. Method according to claim 7, using a particle counter counting particles of at least 2,5 microns.

9. Method according to any preceding claim, wherein the air samples are analyzed by DNA or RNA analysis techniques, e.g., TaqMan, LAMP or nested PCR.

10. Method according to any preceding claim, wherein the mycelial substrate material is phase 3 mushroom compost and the method is carried out just before or during unloading the compost from a phase 3 tunnel.
